# FASCICULE DE BREVET EUROPEEN

(11) **EP 3 548 316 B1**
(45) Date de publication et mention de la délivrance du brevet: **30.03.2022**
(21) Numéro de dépôt: 17817801.8
(22) Date de dépôt: 30.11.2017
(51) Int. Cl.: B60C 23/04, H01Q 1/22

(54) **MODULE DE COMMUNICATION RADIOFRÉQUENCE POUR PNEUMATIQUE**
FUNKMODUL FÜR EINEN REIFEN
RADIO FREQUENCY COMMUNICATION MODULE FOR A TIRE

(30) Priorité: 05.12.2016 FR 1661928
(43) Date de publication de la demande: 09.10.2019
(73) Titulaire: Compagnie Générale des Etablissements Michelin, 63000 Clermont-Ferrand (FR)
(72) Inventeur: DESTRAVES, Julien, 63040 Clermont-Ferrand Cedex 9 (FR); TOURENNE, Annabel, 63040 Clermont-Ferrand Cedex 9 (FR); NOEL, Sebastien, 63040 Clermont-Ferrand Cedex 9 (FR); CLERGEAT, Jean-Mathieu, 63040 Clermont-Ferrand Cedex 9 (FR)
(74) Mandataire: Roussy, Delphine
(86) Numéro de dépôt international: PCT/FR2017/053320
(87) Numéro de publication internationale: WO 2018/104622

(56) Documents cités:
- EP-A2- 1 310 386
- WO-A1-2012/030321
- US-A- 5 196 845
- US-A1- 2016 176 247

## Description

### Domaine de l'invention

La présente invention est relative à un module de communication radiofréquence ou produit semi-fini apte à être inséré dans la structure d'un pneumatique, comportant un transpondeur radiofréquence noyé dans un mélange caoutchouteux.

### État de la technique

Le développement d'organes électroniques intégrés à des ensembles montés, comprenant un pneumatique et une roue, s'est accru ces dernières années. En effet, ces organes électroniques, comme par exemple les transpondeurs radiofréquence ou les tags RFID (acronyme en anglais de Radio Frequency Identification), contiennent des informations sur l'ensemble monté comme l'identifiant du pneumatique, ses dimensions caractéristiques, etc. qui sont des données cruciales dans la gestion et le stockage de tels articles. De plus ces organes électroniques peuvent aussi mesurer des paramètres de l'ensemble monté comme par exemple la température à l'intérieure de la cavité formée par le pneumatique et la jante de roue dans un état monté, gonflé. Certains paramètres sont essentiels à un usage sécuritaire de l'ensemble monté. La communication avec ces organes électroniques notamment pour la communication des paramètres de l'ensemble monté se fait généralement par le biais d'une transmission radiofréquence vers des dispositifs émetteurs/récepteurs extérieurs.

L'intégration de tels organes électroniques au sein de l'ensemble monté et en particulier d'un pneumatique n'est pas simple. En effet, afin d'assurer une fiabilité des informations contenues dans ces organes électroniques et notamment celles concernant l'identifiant du pneumatique tout au long du cycle du produit, il est préférable que l'organe électronique soit solidaire du pneumatique pour lequel il contient des informations d'identification. L'intégration de tels organes électroniques au sein de la structure d'un pneumatique pose un certain nombre de défis. En premier, l'insertion d'un organe électronique au sein de la structure du pneumatique peut engendrer des déchéances du pneumatique, il faut donc s'assurer de l'intégrité physique du pneumatique tout au long de son cycle de vie. Le second concerne la performance de radiocommunication de l'organe électronique. En effet, la structure complexe d'un ensemble monté avec, en particulier, ses empilages de mélanges caoutchouteux de permittivités différentes ainsi que ses éléments métalliques génèrent des perturbations dans le fonctionnement radiofréquence de l'antenne de l'organe électronique en particulier dans la bande de fréquences UHF (acronyme d'Ultra Hautes Fréquences). Enfin, le troisième défi consiste à s'assurer de l'intégrité physique de l'organe électronique lui-même tout au long du cycle de vie du pneumatique et notamment en raison des fortes sollicitations thermomécaniques subies par le pneumatique en condition de roulage.

Le document EP1977912 A1 décrit un pneumatique comportant dans sa structure une module électronique de communication comportant un transpondeur radiofréquence avec une puce électronique et une antenne rayonnante apte à communiquer avec un lecteur radiofréquence dans lequel, l'antenne rayonnante comportant deux tronçons d'antennes hélicoïdales, la puce électronique est connectée galvaniquement aux deux tronçons d'antennes hélicoïdales. Au delà les documents US 5 196 845A et WO2012/030321A1 illustrent de-même l'art antérieur, divulguant respectivement un transponder ayant une constellation de deux antennes couplées inductivement, et une antenne rayonnante constituée d'un ressort hélicoïdal monobrin constituée d'une couche de conduction.

### Description brève de l'invention

L'invention a pour objet un module électronique de communication radiofréquence ou semi-fini apte à être intégré dans la structure d'un pneumatique, comportant un transpondeur radiofréquence noyé dans un mélange caoutchouteux et comportant une puce électronique et une antenne rayonnante apte à communiquer avec un lecteur radiofréquence, dans lequel le transpondeur radiofréquence comporte en plus une antenne primaire connectée électriquement à la puce électronique, dans lequel l'antenne primaire est couplée électromagnétiquement à l'antenne rayonnante, dans lequel l'antenne rayonnante est constituée d'un ressort hélicoïdal monobrin, et dans lequel l'antenne rayonnante a une âme en acier avec une couche extérieure d'adhésion métallique au mélange caoutchouteux qui l'entoure.

De préférence la couche d'adhésion métallique de l'antenne rayonnante est choisie dans le groupe constitué par le cobalt, le zinc, le nickel, l'aluminium, le cuivre, l'étain et un alliage de deux ou plus des composés cuivre, zinc, aluminium, nickel, cobalt, étain.

Avantageusement, le mélange caoutchouteux comporte un promoteur d'adhésion avec la couche d'adhésion de l'antenne rayonnante.

Ce promoteur d'adhésion peut être un sel de cobalt ou de nickel.

L'intégration d'un tel module électronique dans un pneumatique permet de réduire les risques de détérioration de l'organe de par sa structure tout en améliorant la performance de radiocommunication et en minimisant les risques liés à l'intégrité physique du pneumatique.

En effet, la détérioration de l'organe électronique provient généralement de défaillances au niveau de la connexion électrique existant entre l'antenne rayonnante de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations du pneumatique sans générer de trop fortes contraintes mécaniques au sein de sa jonction galvanique avec la puce électronique. Enfin la nature souple de l'antenne rayonnante limite les risques de détérioration de la zone du pneumatique proche du transpondeur.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

L'antenne rayonnante monobrin du transpondeur permet à elle seule un ancrage mécanique fort du transpondeur dans le ou les mélanges caoutchouteux adjacents, mais la présence de liaisons chimiques fortes entre la couche d'adhésion de l'antenne et le mélange caoutchouteux qui l'entoure renforce la résistance du module de communication aux sollicitations en roulage dans un pneumatique ainsi que celle du pneumatique qui l'accueille.

On entend ici par le terme « transpondeur radiofréquence » que l'interrogation du transpondeur radiofréquence se fait extérieurement à celui-ci et de façon passive. Les phases d'interrogation ne nécessitent alors aucune énergie propre au transpondeur radiofréquence. La fonctionnalité du transpondeur radiofréquence est principalement un rôle d'identification de l'enveloppe pneumatique.

En particulier la fréquence de communication du transpondeur radiofréquence est située dans la bande des UHF (acronyme de Ultra Hautes Fréquences) comprise entre 300MHz et 3GHz permettant d'avoir un compromis avantageux entre une petite taille de l'antenne rayonnante, facilement intégrable à une enveloppe pneumatique, et une grande distance de lecture du transpondeur radiofréquence, loin de l'enveloppe pneumatique. De façon avantageuse, le transpondeur radiofréquence communique dans la bande étroite de fréquences comprise entre 860 MHz et 960 MHz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration du transpondeur radiofréquence dans l'enveloppe pneumatique.

Selon un mode de réalisation préférentiel, l'antenne rayonnante définissant un premier axe longitudinal, l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante pour avoir la qualité de radiocommunication souhaitée. Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieure à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation avantageux, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

On entend ici par le terme « zone centrale », le cylindre défini par le diamètre intérieur du ressort hélicoïdal situé de part et d'autre du plan médian du ressort hélicoïdal et dont la hauteur correspond à 25 % de la longueur du ressort hélicoïdal, de préférence 15 % de la longueur du ressort hélicoïdal.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique créé par une bobine parcourue par un courant électrique étant maximal au centre de la longueur de la bobine (dans le cas d'une antenne λ/2), il est préférable de placer le plan médian de l'antenne primaire dans la zone centrale de l'antenne rayonnante et plus préférentiellement au centre de celle-ci pour maximiser le champ magnétique à l'origine du couplage inductif.

Avantageusement, le mélange caoutchouteux entourant au moins en partie le transpondeur radiofréquence est en forme de deux couches et le transpondeur radiofréquence est disposé entre ces deux couches.

Selon un premier exemple de réalisation, l'antenne rayonnante définissant l'orientation axiale du module de communication radiofréquence, les deux couches sont de mêmes dimensions et sont disposées selon une direction normale à la direction axiale en quinconce.

Cela permet, à partir d'une géométrie de couches donnée d'obtenir un semi-fini avec les largeurs des surfaces extérieure et intérieure différentes.

Selon un autre mode de réalisation, l'antenne rayonnante définissant la direction axiale du module de communication radiofréquence et les deux couches étant de forme parallélépipédique et de largeur inférieure pour la couche supérieure, dans toute section normale à la direction axiale l'angle entre la surface inférieure du module de communication radio fréquence et la tangente passant par les extrémités supérieures des deux couches est inférieur à 40 degrés et de préférence inférieur à 35 degrés.

Cette géométrie a l'avantage de faciliter lors de la mise en place d'un module ou semi-fini dans la structure d'un pneumatique avant cuisson de faciliter l'évacuation de l'air entre les deux interfaces caoutchouteuses qui accueillent le module et ainsi de ne pas dégrader en roulage l'intégrité du pneumatique.

De préférence le mélange qui entoure le transpondeur est un mélange caoutchouteux isolant électrique. Cela permet de ne pas dégrader la performance de communication radio de l'antenne rayonnante.

Selon un mode de réalisation, le mélange caoutchouteux du module électronique n'est pas vulcanisé.

Ce mélange caoutchouteux peut aussi être au moins partiellement vulcanisé.

De préférence, le mélange caoutchouteux du module de communication a une constante diélectrique à 915 MHz inférieure à 6.5.

L'invention a aussi pour objet un procédé de fabrication d'un ensemble pneumatique et transpondeur radiofréquence, dans lequel :
- on met en place successivement l'ensemble des constituants du pneumatique sur un outil d'assemblage pour constituer une ébauche de pneumatique ;
- au cours de l'une des étapes d'assemblage précédente on ajoute à la surface de l'un des constituants du pneumatique un module de communication radiofréquence selon l'invention ; et
- on vulcanise l'ébauche de pneumatique pour donner un pneumatique vulcanisé comportant dans sa structure un transpondeur radiofréquence.

L'invention concerne particulièrement les modules de communication pour des pneumatiques destinés à équiper des véhicules à moteur de type tourisme, SUV ("*Sport Utility Vehicles*"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 présente une vue éclatée schématique d'un module de communication radio fréquence ;
- la figure 2 présente en coupe selon un plan médian un mode de réalisation d'un module de communication radio fréquence ;
- la figure 3 présente en coupe selon un plan médian un deuxième mode de réalisation d'un module de communication radio fréquence ;
- la figure 4 présente une vue de détail d'une antenne rayonnante d'un transpondeur radiofréquence selon l'invention ;
- la figure 5 présente une vue en perspective de la partie électronique d'un transpondeur radiofréquence dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'intérieur de l'antenne rayonnante ;
- la figure 7 présente une vue en perspective d'un transpondeur radiofréquence selon l'invention dans une configuration où la partie électronique est située à l'extérieur de l'antenne rayonnante ;
- la figure 8 présente une comparaison du seuil d'activation de tags RFID UHF situés à l'intérieur d'un pneumatique ;
- la figure 9 est un synoptique d'un procédé de fabrication d'un patch d'identification comprenant un transpondeur radiofréquence selon l'invention ; et
- la figure 10 illustre en coupe axiale un pneumatique comportant un module radiofréquence placé dans sa structure ainsi qu'un module radiofréquence fixé par collage sur sa paroi interne.

### Description détaillée de l'invention

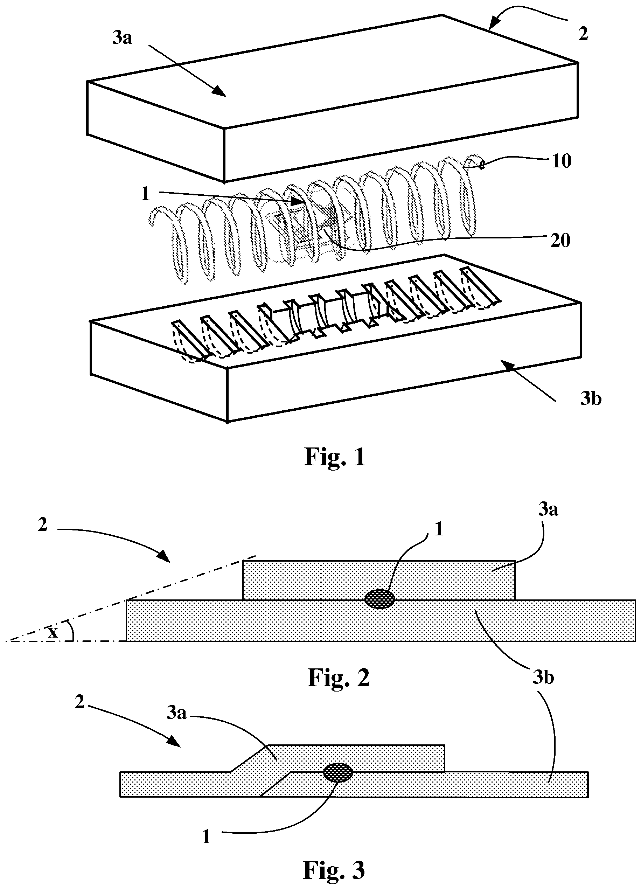

La figure 1 présente un éclaté d'un module de communication radiofréquence 2. Ce module 2 comprend un transpondeur radiofréquence 1 noyé entre deux couches 3a et 3b d'un mélange caoutchouteux isolant électriquement non-vulcanisé. On note que le transpondeur radiofréquence 1 est dans une configuration où la partie électronique 20 est située à l'intérieur de l'antenne rayonnante 10. Le module de communication radiofréquence est un produit semi-fini apte à être intégré dans la structure d'un pneumatique lors de la fabrication de celui-ci.

Le mélange caoutchouteux d'enrobage contient 100 pce (parties pour 100 parties d'élastomère en masse) de polymère tel que EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Le mélange d'enrobage isolant électriquement comporte aussi un promoteur d'adhésion pour le lier chimiquement à la couche d'adhésion de l'antenne.

Ce promoteur peut être un sel de cobalt ou de nickel, par exemple du naphtenate de cobalt à un taux inférieur à 3 pce et avec un taux de soufre adapté de l'ordre de 5 à 7 pce.

La figure 2 présente de façon très schématique en vue normale à l'axe longitudinal défini par l'antenne rayonnante monobrin du transpondeur radio fréquence un premier exemple de réalisation d'un module de communication. Dans ce mode de réalisation, la couche 3a a une largeur transversale inférieure à la largeur transversale de la couche 3b et le transpondeur 1 est placé entre les deux couches 3a et 3b. La longueur des couches est comprise entre 40 et 80 mm. La largeur transversale de la couche 3a est à titre d'exemple de l'ordre de 8 mm et celle de la couche 3b de l'ordre de 15 mm. L'épaisseur des couches est de l'ordre de 3 mm.

Il est à noter que l'angle x entre la surface inférieure de la couche 3b et la droite passant par les deux extrémités latérales supérieures des couches 3a et 3b est inférieur à 40 degrés et de préférence inférieur à 35 degrés pour faciliter l'évacuation de l'air lors de la mise en place du module pendant la fabrication du pneumatique.

La figure 3 présente un deuxième exemple de réalisation d'un module de communication radio fréquence 2. Dans cet exemple, les deux couches 3a et 3b sont de tailles identiques et déposées partiellement l'une sur l'autre en quinconce. Le transpondeur radiofréquence est comme précédemment disposé entre les deux couches de mélange caoutchouteux. Cela permet d'obtenir la même géométrie du module de communication.

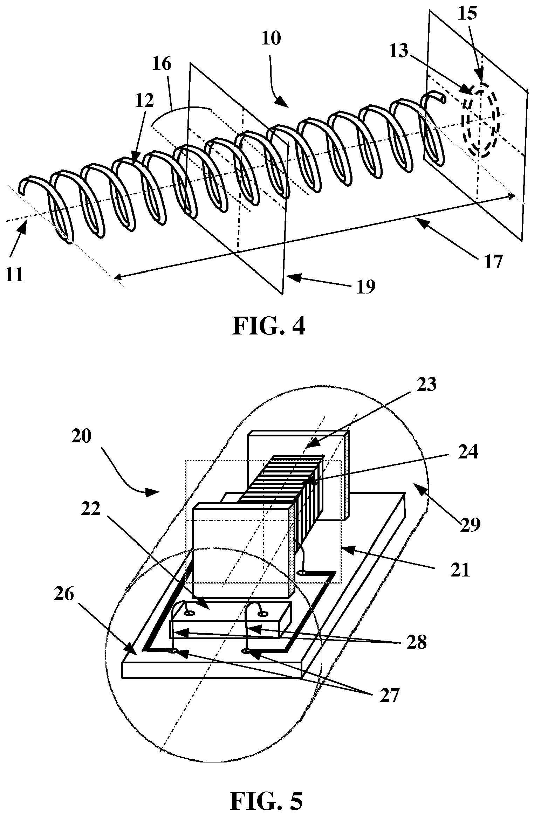

La figure 4 présente une antenne rayonnante 10 constituée d'un fil en acier 12 qui a été déformé plastiquement afin de former un ressort hélicoïdal présentant un axe de révolution 11. Ce fil d'acier est revêtu extérieurement d'une couche d'adhésion métallique en laiton (alliage Zn-Cu) ou de zinc. L'antenne peut aussi être recouvert d'une fine couche métallique de Co, Ni, Al, ou d'un alliage de deux ou plus des composés Cu, Zn, Al, Ni, Co, Sn comme indiqué dans le document WO 2014/049058.

Le fil d'acier peut être revêtu de cette couche puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en comptant le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 5 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

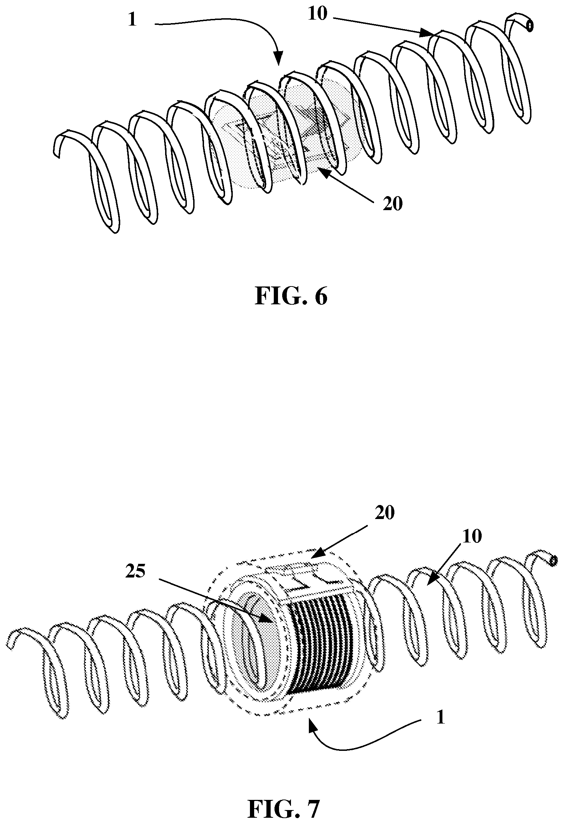

La figure 6 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

La figure 7 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

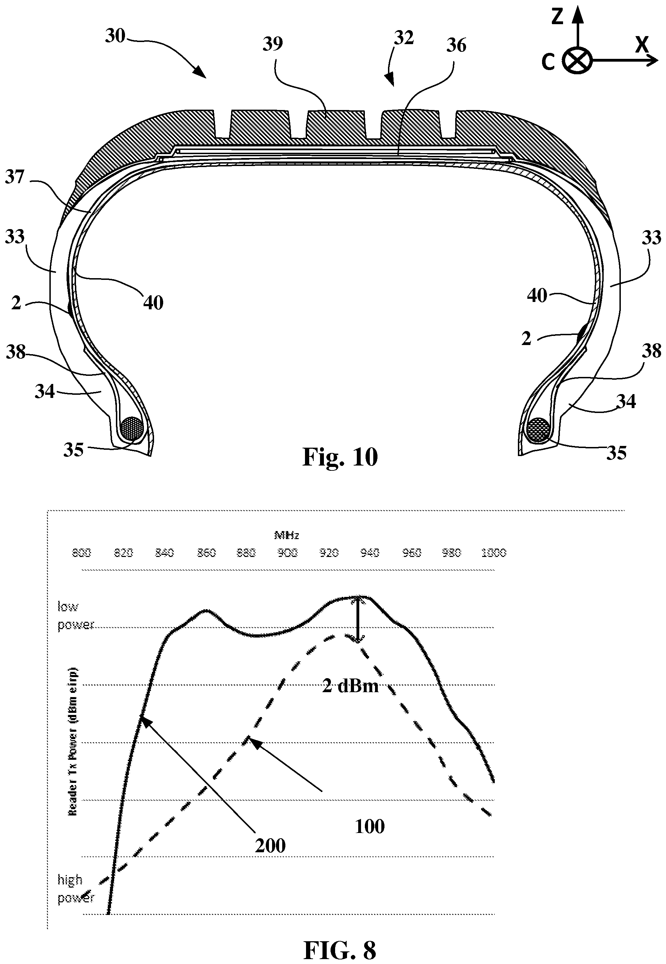

La figure 8 est un graphe de la puissance électrique transmise par un transpondeur radiofréquence situé à l'intérieur d'un pneumatique de marque Michelin XINCITY de dimension 275/70 R22.5 à un lecteur radiofréquence. Le protocole de mesure employé correspond à la norme ISO/IEC 18046-3 et est intitulé « *Identification Electromagnetic Field Threshold and Frequency Peaks* ». Les mesures ont été effectuées pour un balayage en fréquence large et non ponctuellement comme habituellement. L'axe des ordonnées représente la fréquence du signal de communication. L'axe des abscisses est la puissance électromagnétique rayonnée par le lecteur et son antenne exprimée en décibel pour 1 mW (dBm) permettant d'alimenter la puce, c'est-à-dire son seuil d'activation, et par conséquence de recevoir une réponse du tag. Le lecteur est tel que décrit dans l'état de l'art et le tag RFID de référence tel que décrit dans le document WO 2012030321. La courbe en pointillé 100 représente la réponse d'un transpondeur radiofréquence selon le document cité. La courbe en continu 200 représente la réponse d'un transpondeur selon l'invention dans les même conditions de mesure. On note par exemple à 920 Mhz un gain de deux dBm en faveur du transpondeur radiofréquence selon l'invention ainsi qu'une largeur de bande au global supérieur à l'art antérieur.

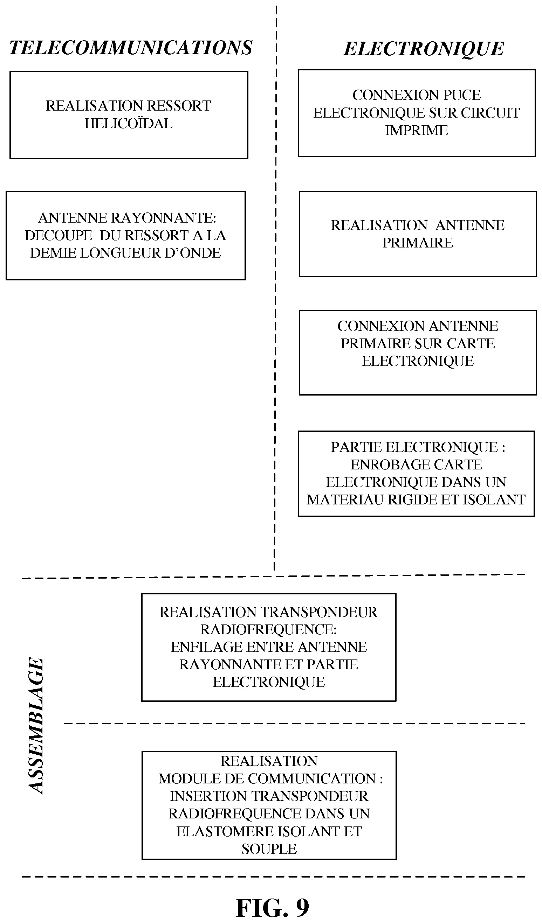

La figure 9 est un synoptique du procédé de fabrication d'un module de communication radiofréquence 2 selon l'invention. L'obtention du module de communication 2 nécessite la fabrication initiale d'un transpondeur radiofréquence 1. Les diverses étapes chronologiques de la fabrication du transpondeur radiofréquence 1 puis celles du patch d'identification 2 sont maintenant décrites. On délimite nettement les étapes liées aux métiers des télécommunications ou de l'électronique de celles de l'assemblage qui peut être réalisé par le manufacturier pneumatique par exemple pour une application sur des pneumatiques.

On distingue trois phases indépendantes et successives.

Dans une première phase, correspondant au métier des télécommunications, on constitue l'antenne rayonnante 10 qui assurera la transmission et la réception des ondes radioélectriques avec le lecteur radiofréquence.

Selon un mode de réalisation spécifique, la première étape consiste à déformer plastiquement le fil d'acier 12 de diamètre externe de 200 micromètres pour former un ressort hélicoïdal à l'aide de moyens industriels adaptés tel qu'un tour à enrouler les ressorts. On obtient ainsi un ressort continu dont le diamètre externe 15 est de l'ordre de 1,5 millimètres qui est petit vis-à-vis de la longueur 17 de l'antenne rayonnante finale comprise entre 35 à 55 millimètres que l'on souhaite, par exemple 50 millimètres. Un traitement thermique peut être appliqué après cette étape de déformation plastique, par exemple un chauffage à une température supérieure à 200°Celsius pendant au moins 30 mn, afin de relaxer les précontraintes dans le ressort hélicoïdal ainsi formé.

La seconde étape consiste à sectionner le ressort hélicoïdal par découpe laser à la longueur souhaitée correspondant à la demi longueur d'onde de la fréquence des signaux radioélectriques de communication en tenant compte de la vitesse de propagation de ces ondes dans un milieu caoutchouteux, soit environ 50 millimètres. La pièce mécanique ainsi obtenue représente l'antenne rayonnante 10 selon l'invention.

Dans une deuxième phase, on réalise la partie électronique 20 du transpondeur radiofréquence 1, qui assurera l'interrogation et la réponse de la puce électronique 22 vers l'antenne rayonnante 10. La transmission d'informations entre l'antenne rayonnante 10 et la partie électronique 20 est réalisée par couplage inductif à l'aide d'une antenne primaire 24.

Ce dispositif électronique, encapsulé dans la masse rigide 29, est composé d'une part d'une puce électronique 22 et d'autre part d'une antenne primaire 24.

Un mode de réalisation de ce dispositif électronique est présenté dans la configuration où la partie électronique 20 est destinée à se situer à l'intérieur de l'antenne rayonnante 10. Dans un mode de réalisation préférentiel, on emploie le procédé leadframe en terme de support électro mécanique à l'antenne primaire 24 et à la puce électronique 22 représentant l'équivalent d'un circuit imprimé 26. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique 22 à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils 28 en or de diamètre 20 micromètres entre la puce électronique 22 et le circuit imprimé 26 représenté par la grille. On peut alors mesurer l'impédance électrique de la carte électronique aux points de fixation de l'antenne primaire 24 sur la grille à l'aide d'un appareil électrique adaptée comme un impédancemètre.

La deuxième étape consiste à réaliser l'antenne primaire 24. Ici cette antenne sera constituée d'une bobine à spires circulaires construite directement sur la grille (lead frame) par la technologie du câblage de fil (wire-bonding). Pour cela, un fil d'or de 20 micromètre de diamètre sera employé, on aurait pu employer aussi du fil d'aluminium ou de cuivre palladium, pour réaliser les demi-spires de la bobine sur la face verso de la grille. Le diamètre de la demi-spire est de 600 micromètres, on emploie la technique des ultrasons classique dans l'industrie des semi-conducteurs pour connecter électriquement les fils d'or sur la grille. Ensuite sur la face recto de la grille, on réalise l'autre demi spire afin d'obtenir une bobine cylindrique à 15 spires de diamètre 600 micromètres.

Le nombre de spires de l'antenne primaire 24 est déterminé de telle sorte que l'impédance électrique de l'antenne primaire 24 soit adaptée à l'impédance électrique de la carte électronique comprenant au moins le circuit imprimé 26 représenté par la grille et la puce électronique 22. Dans notre cas, l'impédance électrique de la puce électronique 22 seule est un nombre complexe ayant une valeur par exemple de (10-j^{∗}150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique 20 consiste à encapsuler la grille et les composants qui lui sont connectés, à l'aide d'une résine époxy haute température, dans une masse rigide 29. Pour cela, la technologie du globtop sera employée. Elle consiste à déposer la résine à l'état liquide, comme la MONOPOX GE780 de la marque DELO, à l'aide de moyens d'aspiration et d'expiration telle qu'une seringue. L'opération se déroule dans un environnement classique de l'industrie micro électronique telle une salle blanche. Ensuite, une polymérisation de la résine liquide est effectuée par l'intermédiaire d'une lampe à rayons ultraviolets générant une température d'au moins 130°Celsius accélérant la polymérisation de la résine pour atteindre un temps de réaction chimique de l'ordre de la minute. La masse rigide 29 ici de cette polymérisation forme une capsule enfermant la grille et les composants électroniques et représente la carte électronique du transpondeur radiofréquence 1.

La troisième phase de la réalisation du transpondeur radiofréquence 1 consiste à assembler l'antenne rayonnante 10 réalisée à la première étape à la partie électronique 20 réalisée à la deuxième étape.

Dans la première configuration où l'antenne primaire 24 est destinée à se situer à l'intérieur de l'antenne rayonnante 10, on procède de la manière suivante.

Tout d'abord on saisit à l'aide d'une pince à long bec adaptée la partie électronique 20 inscrit dans un cylindre dans le diamètre est inférieur ou égal au diamètre interne 13 de l'antenne rayonnante 10 réalisée à la première étape, soit de l'ordre du millimètre.

On insère la partie électronique 20 à l'intérieur de l'antenne rayonnante 10 en positionnant l'axe de symétrie 23 de l'antenne primaire dans la direction de l'axe de révolution 11 de l'antenne rayonnante 10. De plus, on enfonce la partie électronique 20 dans l'antenne rayonnante 10 jusqu'à ce que le plan médian 21 de l'antenne primaire coïncide avec le plan médian 19 de l'antenne rayonnante. Ensuite on libère la partie électronique 20 de la pince à long bec et retire délicatement la pince de l'intérieur de l'antenne rayonnante 10.

Un auto centrage, parallélisme des axes et position relative des plans médians entre l'antenne rayonnante 10 et l'antenne primaire 24, est ainsi réalisé favorable à un couplage inductif de qualité entre les deux antennes.

Selon un mode de réalisation optimisée, on emploie une goupille fendue comme pièce facilitant le positionnement entre l'antenne rayonnante10 et l'antenne primaire 24. Il s'agit par exemple d'une goupille tubulaire en matériau souple et isolant électriquement comme par exemple un mélange caoutchouteux. Cette goupille présente une fente sur la longueur du tube et des orifices cylindrique situés dans l'épaisseur sur une de ses extrémités suivant l'axe de la goupille. Idéalement, la goupille est munie d'une marque sur la face externe qui identifie le plan médian 21 de l'antenne primaire lorsque la partie électronique 20 est logée à l'intérieur de la goupille. Ce tube possède des diamètres intérieur et extérieur qui correspondent respectivement au diamètre extérieur circonscrit à la partie électronique 20 et au diamètre intérieur 13, parfaitement ajusté, de l'antenne rayonnante 10. On insère la partie électronique 20 à l'intérieur du tube fendu en écartant la goupille au niveau de la fente. La partie électronique 20 est mise en place de telle sorte que l'axe de symétrie 23 de l'antenne primaire 24 soit parallèle à l'axe de la goupille et que le plan médian 21 de l'antenne primaire 24 soit confondu avec la marque sur la face externe de la goupille.

Ensuite la goupille, préalablement saisie par une pince à longue portée dont chaque extrémité s'est logée dans les orifices cylindriques de la goupille, est guidée à l'aide de la pince à l'intérieur de l'antenne rayonnante 10 afin que, d'une part la marque sur la face externe de la goupille coïncide avec le plan médian 19 de l'antenne rayonnante, et d'autre part l'axe de la goupille soit parallèle à l'axe de révolution 11 de l'antenne rayonnante 10. La fermeture de la pince à longue portée, resserre la fente de la goupille facilitant l'introduction de la goupille dans la l'antenne rayonnante 10. Une fois en place, on ouvre la pince à longue portée, rendant sa forme initiale à la goupille qui devient solidaire de l'antenne rayonnante 10. Il suffit de retirer les extrémités de la pince des orifices de la goupille et de retirer délicatement la pince.

L'ensemble ainsi constitué représente un transpondeur radio fréquence 1.

La dernière étape, une fois le transpondeur radiofréquence 1 réalisé est l'obtention d'un produit semi-fini ou module de communication radiofréquence 2 pour faciliter une mise en application du transpondeur radiofréquence 1 dans des objets à identifier en partie constitués par des mélanges caoutchouteux. Quelle que soit la configuration du transpondeur radiofréquence 1, on procède de la façon suivante pour cette étape.

On place le transpondeur radiofréquence 1 constitué à l'étape précédente entre deux couches de mélanges caoutchouteux 3a et 3b. Le transpondeur radiofréquence 1 est pris en sandwich entre deux parallélépipèdes en mélange caoutchouteux cru dont les dimensions caractéristiques, adaptées aux dimensions du transpondeur radiofréquence, sont les suivantes : une longueur comprise entre 40 et 80 millimètres, une largeur comprise entre 5 et 15 millimètres et une épaisseur idéalement de 3 millimètres mais au moins comprise entre 2 et 5 millimètres. La direction longitudinale du parallélépipède correspond à l'axe de l'antenne rayonnante10. L'ensemble se situe au préalable sur la face interne d'une matrice métallique d'un outil de presse de dimension adaptée au volume du produit semi-fini.

On applique à l'aide d'un poinçon métallique complémentaire de la matrice, un effort de compression de 1000 Newtons au moyen d'un outil de presse, par exemple une presse uniaxiale pneumatique, à l'ensemble afin de former une géométrie compacte présentant un axe de symétrie, de longueur par exemple de 60 millimètres, inscrit dans un cylindre de diamètre d'environ 20 millimètres correspondant à un module de communication radio fréquence 2 du transpondeur radiofréquence 1.

Dans un mode de réalisation particulier, on emploie des promoteurs d'adhésion entre la masse rigide 29 en résine époxy haute température encapsulant la partie électronique 20 du transpondeur radiofréquence 1 et le mélange caoutchouteux du patch d'identification 2. Un promoteur d'adhésion de type chemosil de la marque CHEMOSIL de Lord Corp est appliqué par pulvérisation sur la face externe de la partie électronique 20 avant la mise en sandwich du transpondeur radiofréquence 1 entre les deux couches de mélange caoutchouteux 3a et 3b.

Finalement, la mise en œuvre industrielle d'un module d'identification 2 selon l'invention pour un objet à identifier telle une enveloppe pneumatique peut être effectuée selon au moins deux modes de réalisation. Dans un premier mode de réalisation préférentielle, il suffit d'incorporer le module d'identification 2 en mélange caoutchouteux cru dans l'ébauche du pneumatique lors de la confection de l'enveloppe. On place géométriquement le module d'identification 2 entre les divers composants caoutchouteux de l'ébauche crue de l'ébauche de pneumatique. Idéalement, il est placé dans une zone du pneumatique subissant des niveaux de déformations acceptables pour que l'antenne rayonnante 10 ne soit pas déformée plastiquement. L'ébauche pneumatique subit les diverses phases de fabrication dont la cuisson en autoclave figeant la structure du module d'identification 2 et le rendant solidaire du pneumatique ainsi réalisé. Le module d'identification 2 de l'enveloppe pneumatique est alors prêt à l'emploi.

Un autre mode de réalisation préférentielle consiste à figer la structure caoutchouteuse du module d'identification 2 par réticulation ou vulcanisation au cours d'une étape postérieure à la fabrication du patch d'identification 2. Le dispositif obtenu à la suite de cette opération est incorporé à l'enveloppe pneumatique par une technique classique de fixation caoutchouc/caoutchouc connue de l'homme du métier comme par exemple l'adhésion par réticulation à froid sur la gomme intérieure de l'enveloppe pneumatique d'une couche de gomme de liaison usuelle vulcanisant à froid, telle que Gray gum fournie par Tech International. Le module d'identification 2 de l'enveloppe pneumatique est alors prêt à l'emploi.

La figure 10 présente en coupe axiale un pneumatique comportant dans sa structure un module de communication radiofréquence placé selon les deux modes précédemment décrits.

La figure 10 indique les directions axiale X, circonférentielle C et radiale Z ainsi que le plan médian EP (plan perpendiculaire à l'axe de rotation du pneumatique qui est situé à mi-distance des deux bourrelets 4 et passe par le milieu de l'armature de sommet 6).

Ce pneumatique 30 comporte un sommet 32 renforcé par une armature de sommet ou ceinture 36, deux flancs 33 et deux bourrelets 34, chacun de ces bourrelets 34 étant renforcé avec une tringle 35. L'armature de sommet 36 est surmontée radialement extérieurement d'une bande de roulement caoutchouteuse 39. Une armature de carcasse 37 est enroulée autour des deux tringles 35 dans chaque bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37.

Ce pneumatique 30 comporte à titre d'illustration un module de communication 2 placé à l'interface entre le mélange caoutchouteux constituant le flanc 33 et la nappe carcasse 37. La position illustrée est radialement extérieure à l'extrémité du retournement 38 de la nappe carcasse 37 mais sous le milieu du flanc 33. Cette position est excellente pour la communication radio fréquence entre le transpondeur et un lecteur extérieur et la très bonne robustesse du transpondeur radiofréquence du module de communication lui permet de supporter sans dommages les fortes sollicitations mécaniques liées au roulage.

Le pneumatique 30 comporte aussi un module de communication sous sa configuration pré-vulcanisé et fixé sur la gomme intérieure 40 du pneumatique au moyen d'une couche de gomme de liaison usuelle vulcanisant à froid, telle que Gray gum fournie par Tech International. Ce module de communication a été fixé après la fabrication du pneumatique, par exemple en préparation d'opérations de rechapage de la bande de roulement du pneumatique.

## Revendications

1. Module de communication radiofréquence (2) ou semi-fini apte à être intégré dans la structure d'un pneumatique (30) , comportant un transpondeur radiofréquence (1) noyé dans un mélange caoutchouteux (3a, 3b) et comportant une puce électronique (22) et une antenne rayonnante (10) apte à communiquer avec un lecteur radiofréquence, **caractérisé en ce que** ledit transpondeur radiofréquence (1) comporte en plus une antenne primaire (24) connectée électriquement à la puce électronique (22), **en ce que** l'antenne primaire (24) est couplée électromagnétiquement à l'antenne rayonnante (10), **en ce que** l'antenne rayonnante (10) est constituée d'un ressort hélicoïdal monobrin définissant un premier axe longitudinal (11) , **en ce que** l'antenne primaire (24) est une bobine ayant au moins une spire définissant un deuxième axe longitudinal (23) qui est circonscrite dans un cylindre dont l'axe de révolution est parallèle au deuxième axe longitudinal (23) et dont le diamètre est compris entre le tiers et trois fois, de préférence entre la moitié et deux fois, le diamètre moyen du ressort hélicoïdal de l'antenne rayonnante (10), et **en ce que** ladite antenne monobrin (10) a une âme en acier avec une couche extérieure d'adhésion métallique au mélange caoutchouteux qui l'entoure.

2. Module de communication radiofréquence (2) selon la revendication 1, dans lequel, la couche d'adhésion métallique de l'antenne rayonnante (10) est choisie dans le groupe constitué par le cobalt, le zinc, le nickel, l'aluminium, l'étain, le cuivre et un alliage de deux ou plus des composés cuivre, zinc, aluminium, nickel, cobalt, étain.

3. Module de communication radiofréquence (2) selon l'une des revendications 1 et 2, dans lequel le mélange caoutchouteux (3a, 3b) comporte un promoteur d'adhésion avec la couche d'adhésion de l'antenne rayonnante.

4. Module de communication radiofréquence (2) selon la revendication 3, dans lequel le promoteur d'adhésion est un sel de cobalt ou de nickel.

5. Module de communication radiofréquence (2) selon l'une des revendications 1 à 4, dans lequel, l'antenne rayonnante (10) ayant une zone centrale entre deux zones latérales et l'antenne primaire (24) ayant un plan médian perpendiculaire au deuxième axe longitudinal (23), lesdits premier (11) et deuxième (23) axes longitudinaux sont parallèles entre eux et ledit plan médian de l'antenne primaire (24) est disposé dans la zone centrale de l'antenne rayonnante (10) .

6. Module de communication radiofréquence (2) selon l'une quelconque des revendications 1 à 5, dans lequel l'antenne primaire (24) est disposée à l'intérieur du ressort hélicoïdal monobrin de l'antenne rayonnante (10).

7. Module de communication radiofréquence (2) selon l'une quelconque des revendications précédentes, dans lequel le mélange caoutchouteux (3a, 3b) dans lequel est noyé le transpondeur radiofréquence (1) est en forme de deux couches (3a, 3b) et dans lequel le transpondeur radiofréquence (1) est disposé entre lesdites deux couches (3a, 3b).

8. Module de communication radiofréquence (2) selon la revendication 7, dans lequel, l'antenne rayonnante (10) définissant l'orientation axiale dudit module de communication radiofréquence (2), lesdites deux couches (3a, 3b) sont de mêmes dimensions et sont disposées selon une direction normale à la direction axiale en quinconce.

9. Module de communication radiofréquence (2) selon l'une des revendications 7 et 7, dans lequel, l'antenne rayonnante (10) définissant la direction axiale dudit module de communication radiofréquence (2) et lesdites deux couches (3a, 3b) étant de forme parallélépipédique et de largeur inférieure pour la couche supérieure, dans toute section normale à la direction axiale l'angle entre la surface inférieure du module de communication radiofréquence (2) et la tangente passant par les extrémités supérieures des deux couches (3a, 3b) est inférieur à 40 degrés et de préférence inférieur à 35 degrés.

10. Module de communication radiofréquence (2) selon l'une quelconque des revendications précédentes, dans lequel le mélange caoutchouteux (3a, 3b) dans lequel est noyé le transpondeur radiofréquence (1) est un mélange isolant électrique.

11. Module de communication radiofréquence (2) selon l'une quelconque des revendications précédentes, dans lequel le mélange caoutchouteux (3a, 3b) n'est pas vulcanisé.

12. Module de communication radiofréquence (2) selon l'une quelconque des revendications 1 à 10, dans lequel le mélange caoutchouteux (3a, 3b) est au moins partiellement vulcanisé.

13. Module de communication radiofréquence (2) selon l'une quelconque des revendications précédentes, dans lequel le mélange caoutchouteux (3a, 3b) a une constante diélectrique à 915 MHz inférieure à 6.5.

14. Procédé de fabrication d'un ensemble pneumatique et transpondeur radiofréquence, dans lequel :
- on met en place successivement l'ensemble des constituants du pneumatique sur un outil d'assemblage pour constituer une ébauche de pneumatique ;
- au cours de l'une des étapes d'assemblage précédente on ajoute à la surface de l'un des constituants du pneumatique un module de communication radiofréquence (2) selon l'une quelconque des revendications précédentes ; et
- on vulcanise l'ébauche de pneumatique pour donner un pneumatique (30) vulcanisé comportant dans sa structure un transpondeur radiofréquence (1).

15. Pneumatique neuf ou pneumatique rechapé (30) comportant dans sa structure ou sur sa paroi un module de communication radiofréquence (2) selon l'une quelconque des revendications 1 à 13.

## Patentansprüche

1. RF-Kommunikationsmodul (2) oder Halbfertigprodukt, das in die Struktur eines Luftreifens (30) integriert werden kann, das einen in eine Kautschukmischung (3a, 3b) eingebetteten RF-Transponder (1) aufweist und einen Chip (22) und eine strahlende Antenne (10) aufweist, die mit einem RF-Lesegerät kommunizieren kann, **dadurch gekennzeichnet, dass** der RF-Transponder (1) außerdem eine Primärantenne (24) aufweist, die elektrisch mit dem Chip (22) verbunden ist, dass die Primärantenne (24) elektromagnetisch mit der strahlenden Antenne (10) gekoppelt ist, dass die strahlende Antenne (10) aus einer Eindraht-Schraubenfeder besteht, die eine erste Längsachse (11) definiert, dass die Primärantenne (24) eine Spule ist, die mindestens eine Windung hat, die eine zweite Längsachse (23) definiert, die von einem Zylinder umgeben ist, dessen Drehachse parallel zur zweiten Längsachse (23) ist und dessen Durchmesser zwischen dem Drittel und dem Dreifachen, vorzugsweise zwischen der Hälfte und dem Zweifachen, des mittleren Durchmessers der Schraubenfeder der strahlenden Antenne (10) liegt, und dass die Eindraht-Antenne (10) eine Stahlseele mit einer Außenschicht mit metallischer Adhäsion an der sie umgebenden Kautschukmischung hat.

2. RF-Kommunikationsmodul (2) nach Anspruch 1, wobei die metallische Adhäsionsschicht der strahlenden Antenne (10) aus der Gruppe ausgewählt wird, die aus Kobalt, Zink, Nickel, Aluminium, Zinn, Kupfer und einer Legierung von zwei oder mehr der Verbindungen Kupfer, Zink, Aluminium, Nickel, Kobalt, Zinn besteht.

3. RF-Kommunikationsmodul (2) nach einem der Ansprüche 1 und 2, wobei die Kautschukmischung (3a, 3b) einen Adhäsionspromoter mit der Adhäsionsschicht der strahlenden Antenne aufweist.

4. RF-Kommunikationsmodul (2) nach Anspruch 3, wobei der Adhäsionspromoter ein Kobalt- oder Nickelsalz ist.

5. RF-Kommunikationsmodul (2) nach einem der Ansprüche 1 bis 4, wobei, da die strahlende Antenne (10) einen zentralen Bereich zwischen zwei seitlichen Bereichen hat, und die Primärantenne (24) eine Mittelebene lotrecht zur zweiten Längsachse (23) hat, die ersten (11) und zweiten (23) Längsachsen zueinander parallel sind und die Mittelebene der Primärantenne (24) im zentralen Bereich der strahlenden Antenne (10) angeordnet ist.

6. RF-Kommunikationsmodul (2) nach einem der Ansprüche 1 bis 5, wobei die Primärantenne (24) innerhalb der Eindraht-Schraubenfeder der strahlenden Antenne (10) angeordnet ist.

7. RF-Kommunikationsmodul (2) nach einem der vorhergehenden Ansprüche, wobei die Kautschukmischung (3a, 3b), in die der RF-Transponder (1) eingebettet ist, in Form von zwei Schichten (3a, 3b) vorliegt, und wobei der RF-Transponder (1) zwischen den zwei Schichten (3a, 3b) angeordnet ist.

8. RF-Kommunikationsmodul (2) nach Anspruch 7, wobei, da die strahlende Antenne (10) die axiale Ausrichtung des RF-Kommunikationsmoduls (2) definiert, die zwei Schichten (3a, 3b) die gleichen Abmessungen haben und gemäß einer Richtung normal zur axialen Richtung versetzt angeordnet sind.

9. RF-Kommunikationsmodul (2) nach einem der Ansprüche 7 und 8, wobei, da die strahlende Antenne (10) die axiale Richtung des RF-Kommunikationsmoduls (2) definiert und die zwei Schichten (3a, 3b) von parallelepipedischer Form sind und eine geringere Breite für die obere Schicht in jedem Querschnitt normal zur axialen Richtung haben, der Winkel zwischen der unteren Fläche des RF-Kommunikationsmoduls (2) und der durch die oberen Enden der zwei Schichten (3a, 3b) gehenden Tangente kleiner als 40 Grad und vorzugsweise kleiner als 35 Grad ist.

10. RF-Kommunikationsmodul (2) nach einem der vorhergehenden Ansprüche, wobei die Kautschukmischung (3a, 3b), in die der RF-Transponder (1) eingebettet ist, eine elektrisch isolierende Mischung ist.

11. RF-Kommunikationsmodul (2) nach einem der vorhergehenden Ansprüche, wobei die Kautschukmischung (3a, 3b) nicht vulkanisiert ist.

12. RF-Kommunikationsmodul (2) nach einem der Ansprüche 1 bis 10, wobei die Kautschukmischung (3a, 3b) zumindest teilweise vulkanisiert ist.

13. RF-Kommunikationsmodul (2) nach einem der vorhergehenden Ansprüche, wobei die Kautschukmischung (3a, 3b) eine Dielektrizitätskonstante bei 915 MHz niedriger als 6.5 hat.

14. Verfahren zur Herstellung einer Einheit aus Luftreifen und RF-Transponder, wobei:
- nacheinander die Gesamtheit der Bestandteile des Luftreifens auf einem Montagewerkzeug angeordnet werden, um einen Luftreifenrohling zu bilden;
- während eines vorhergehenden der Montageschritte an der Oberfläche eines der Bestandteile des Luftreifens ein RF-Kommunikationsmodul (2) nach einem der vorhergehenden Ansprüche hinzugefügt wird; und
- der Luftreifenrohling vulkanisiert wird, um einen vulkanisierten Luftreifen (30) zu ergeben, der in seiner Struktur einen RF-Transponder (1) aufweist.

15. Neuer Luftreifen oder runderneuerter Luftreifen (30), der in seiner Struktur oder auf seiner Wand ein RF-Kommunikationsmodul (2) nach einem der Ansprüche l bis 13 aufweist.

## Claims

1. Radiofrequency communication module (2) or semi-finished product able to be integrated into the structure of a tyre (30), comprising a radiofrequency transponder (1) embedded in a rubber blend (3a, 3b) and comprising an electronic chip (22) and a radiating antenna (10) that is able to communicate with a radiofrequency reader, **characterized in that** said radiofrequency transponder (1) in addition comprises a primary antenna (24) that is electrically connected to the electronic chip (22), **in that** the primary antenna (24) is electromagnetically coupled to the radiating antenna (10), **in that** the radiating antenna (10) consists of a single-strand helical spring defining a first longitudinal axis (11), **in that** the primary antenna (24) is a coil having at least one turn defining a second longitudinal axis (23) that is circumscribed in a cylinder the axis of revolution of which is parallel to the second longitudinal axis (23) and the diameter of which is comprised between one third and three times, and preferably between half and two times, the average diameter of the helical spring of the radiating antenna (10), **and in that** said single-strand antenna (10) has a core made of steel with a metal exterior adhesion layer for adhesion to the rubber blend that surrounds it.

2. Radiofrequency communication module (2) according to Claim 1, wherein, the metal adhesion layer of the radiating antenna (10) is chosen from the group consisting of cobalt, zinc, nickel, aluminium, tin, copper and an alloy of two or more of the substances copper, zinc, aluminium, nickel, cobalt, and tin.

3. Radiofrequency communication module (2) according to one of Claims 1 and 2, wherein the rubber blend (3a, 3b) comprises an adhesion promoter for promoting adhesion with the adhesion layer of the radiating antenna.

4. Radiofrequency communication module (2) according to Claim 3, wherein the adhesion promoter is a salt of cobalt or of nickel.

5. Radiofrequency communication module (2) according to one of Claims 1 to 4, wherein, the radiating antenna (10) having a central zone between two lateral zones and the primary antenna (24) having a median plane perpendicular to the second longitudinal axis (23), said first (11) and second (23) longitudinal axes are parallel to each other and said median plane of the primary antenna (24) is placed in the central zone of the radiating antenna (10).

6. Radiofrequency communication module (2) according to any one of Claims 1 to 5, wherein the primary antenna (24) is placed in the interior of the single-strand helical spring of the radiating antenna (10)b.

7. Radiofrequency communication module (2) according to any one of the preceding claims, wherein the rubber blend (3a, 3b) in which the radiofrequency transponder (1) is embedded is formed from two layers (3a, 3b) and wherein the radiofrequency transponder (1) is placed between said two layers (3a, 3b).

8. Radiofrequency communication module (2) according to Claim 7, wherein, the radiating antenna (10) defining the axial orientation of said radiofrequency communication module (2), said two layers (3a, 3b) are of same dimensions and are arranged staggered in a direction normal to the axial direction.

9. Radiofrequency communication module (2) according to one of Claims 7 and 8, wherein, the radiating antenna (10) defining the axial direction of said radiofrequency communication module (2) and said two layers (3a, 3b) being of parallelepipedal shape and the upper layer being of smaller width, in any section normal to the axial direction the angle between the lower surface of the radiofrequency communication module (2) and the tangent passing through the upper ends of the two layers (3a, 3b) is smaller than 40 degrees and preferably smaller than 35 degrees.

10. Radiofrequency communication module (2) according to any one of the preceding claims, wherein the rubber blend (3a, 3b) in which the radiofrequency transponder (1) is embedded is an electrically insulating blend.

11. Radiofrequency communication module (2) according to any one of the preceding claims, wherein the rubber blend (3a, 3b) is not vulcanized.

12. Radiofrequency communication module (2) according to any one of Claims 1 to 10, wherein the rubber blend (3a, 3b) is at least partially vulcanized.

13. Radiofrequency communication module (2) according to any one of the preceding claims, wherein the rubber blend (3a, 3b) has a dielectric constant at 915 MHz lower than 6.5.

14. Process for manufacturing an assembly consisting of a tyre and a radiofrequency transponder, wherein:
- all of the constituents of the tyre are successively placed on an assembling tool in order to form a green tyre;
- in one of the preceding assembly steps a radiofrequency communication module (2) according to any one of the preceding claims is added to the surface of one of the constituents of the tyre; and
- the green tyre is vulcanized in order to obtain a vulcanized tyre (30) comprising in its structure a radiofrequency transponder (1).

15. New tyre or retreaded tyre (30) comprising in its structure or on its wall a radiofrequency communication module (2) according to any one of Claims 1 to 13.
